# EUROPÄISCHE PATENTSCHRIFT

(11) **EP 1 712 410 B1**
(45) Veröffentlichungstag und Bekanntmachung des Hinweises auf die Patenterteilung: **14.01.2009**
(21) Anmeldenummer: 06112624.9
(22) Anmeldetag: 13.04.2006
(51) Int. Cl.: B60N 2/66

(54) **Fahrzeugsitz mit verformbarer Rückenlehne**
Vehicle seat with a deformable backrest
Siège de véhicule à dossier deformable

(30) Priorität: 15.04.2005 DE 102005017713
(43) Veröffentlichungstag der Anmeldung: 18.10.2006
(73) Patentinhaber: GRAMMER AG, 92224 Amberg (DE)
(72) Erfinder: Kohl, Josef, 92242 Hirschau (DE); Erker, Christian, 92256 Hahnbach (DE)
(74) Vertreter: Hannke, Christian

(56) Entgegenhaltungen:
- WO-A-00/21787
- DE-A1- 3 943 008
- US-A- 1 414 637

## Beschreibung

Die Erfindung betrifft einen Fahrzeugsitz mit Rückenlehne und Sitzteil, wobei das Sitzteil gegenüber einem Grundrahmen in Vorwärts- und Rückwärtsrichtung verschiebbar ist und die Rückenlehne einen in Vorwärts- und Rückwärtsrichtung verformbaren Lendenwirbelbereich aufweist, gemäß dem Oberbegriff des Patentanspruches 1.

Aus EP 0 957 716 B1 ist ein Fahrzeugsitz mit einer Rückenlehne und einem Sitzteil bekannt, bei dem im Rückenlehnenbereich ein Lendenstützmechanismus eingebaut ist, welcher sich aus einem biegsamen Stützorgan zusammensetzt, das an seinem oberen und unteren Ende eingespannt ist und derart zusammengezogen werden kann, dass es eine Wölbung, z.B. im Lendenwirbelbereich bildet. Hierdurch wird eine Lendenstütze erhalten, die in Vorwärtsrichtung verstellt werden kann, um durch eine konvexartige Verformung der Rückenlehne im Lendenwirbelbereich eine mehr oder weniger starke Stütze für die Person in Abhängigkeit davon, ob diese ein mehr oder weniger starkes Hohlkreuz aufweist, zur Erhöhung des Sitzkomforts zur Verfügung zu stellen.

Die DE 39 43 008 A1 offenbart einen Fahrzeugsitz mit einem Sitzpolster bzw. Sitzrückenlehne, die bezüglich einer Fahrzeugkarosserie in ihrer Lage nach vorne und nach hinten verstellbar ist. Die Rücksitzlehne ist in obere und untere Rücksitzlehnteile unterteilt, wobei im Wesentlichen der untere Rücksitzlehnteil einem wippenartigen Element entsprechen würde. Des Weiteren ist auch ein schwenkbarer Abschnitt offenbart, welcher an dem Grundrahmen in einem Rückenlehnenbereich des Grundrahmens befestigt ist.

Die US 1,414,637 offenbart einen starren Stützrahmen einer Rückenlehne, welcher an seinem unteren Ende gegenüber einem Grundrahmen vor- und zurückbewegt werden kann. Dabei ist die Rückenlehne an ihrem oberen Ende gegenüber dem Grundrahmen verschiebbar angeordnet.

Derartige Lendenwirbelstützen werden von der Person in ihrer Verformung voreingestellt und verbleiben in dieser Form, bis die Person beispielsweise durch Betätigung eines Handgriffs, an dem ein Bowdenzug befestigt ist, diese neu einstellt.

Ein solches Stützorgan weist einen aufwendigen und komplexen Aufbau insofern auf, als dass eine Einrichtung zum Spannen des Stützorgans, Schiebeglieder und eine Mehrzahl sich horizontal erstreckender miteinander verbundener Stützarme notwendig ist.

Aus EP 1 082 233 B1 ist ein elastisches Wölbelement für Rückenlehnen bekannt, welches als Lordosenstütze wirkt. Das Wölbelement besteht aus einem im Wesentlichen flächigen, wölbbaren Elementteil und aus mindestens einer damit geringflächig fest verbundenen Platte mit zwei freien federnden Enden, wobei die Platte als Stütze gegenüber ein darauf angeordnetes Rückenlehnenpolster bei gewölbtem Elementteil dient. Das Wölbteil wird unabhängig von der Momentanstellung eines Sitzteils des Fahrzeugsitzes betätigt und erfordert die separate Betätigung von hierfür vorgesehenen Betätigungselementen.

Aus EP 0 303 720 B1 ist ein Fahrzeugsitz bekannt mit einem Rückenlehnenträger, der in der Seitenansicht L-förmig ausgebildet ist. Ein Schenkel des L-förmigen Rückenlehnenträgers greift unter einen Sitzträger. Zur Verstellung der Rückenlehnenneigung ist der Schenkel mittels einem Schienenpaar derart geführt, dass bei einer Vorwärtsbewegung des Sitzträgers das freie Ende des anderen im Rückenlehnenbereich angeordneten Schenkels sich in entgegengesetzter Richtung und nach unten bewegt. Auf diese Weise wird durch eine Vorwärtsbewegung der Sitzfläche ein automatisches Nachhintenneigen der Rückenlehne erreicht, jedoch ohne hierbei die Form der Rückenlehne im Lendenwirbelbereich zu verändern.

Demzufolge liegt der vorliegenden Erfindung die Aufgabe zugrunde, einen Fahrzeugsitz mit Rückenlehne und Sitzteil zur Verfügung zu stellen, der durch eine Vorwärtsschiebebewegung des Sitzteils automatisch eine lordoseartige Verformung der Rückenlehne im Lendenwirbelbereich bewirkt.

Diese Aufgabe wird gemäß den Merkmalen des Patentanspruches 1 gelöst.

Ein wesentlicher Punkt der Erfindung liegt darin, dass bei einem Fahrzeugsitz mit Rückenlehne und Sitzteil, wobei das Sitzteil gegenüber einem Grundrahmen in Vorwärts- und Rückwärtsrichtung verschiebbar ist und die Rückenlehne einen in Vorwärts- und Rückwärtsrichtung verformbaren Lendenwirbelbereich aufweist, ein wippenartiges Element angeordnet wird, welches im Lendenwirbelbereich um eine horizontal verlaufende Verschwenkachse schwenkbar positioniert ist. Das wippenartige Element erstreckt sich zumindest teilweise entlang der Rückenlehne in Längs- bzw. Höhenrichtung.

Die Schwenkachse ist zusammen mit dem Sitzteil in Vorwärts- und Rückwärtsrichtung verschiebbar und ein schwenkbarer Abschnitt des wippenartigen Elements ist an dem Grundrahmen in einem Rückenlehnenbereich des Grundrahmens, vorzugsweise mit einem fixierbaren Abstand, befestigt. Auf diese Weise wird durch eine vorwärtsgerichtete Bewegung des Sitzteils selbsttätig eine verminderte Lordosestellung der Rückenlehne im Lendenwirbelbereich eingestellt, die im Extremfall sogar zu einer kyphoseartigen Verformung der Rückenlehne im Lendenwirbelbereich führen kann. Dies führt zu einer komfortableren Sitzstellung der den Fahrzeugsitz benutzenden Person, insbesondere dann, wenn im Zusammenspiel mit der Vorwärtsbewegung des Sitzteils zeitgleich dieses im fahrzeugvorderen Bereich unterseitig mittels einem gegenüber der Sitzteilfläche angewinkelten Gleitlagerbereich nach oben bewegt wird, um während einer Verschiebung des Sitzteils in Vorwärtsrichtung eine Höherstellung des fahrzeugvorderen Bereichs des Sitzteils zu bewirken. Hierfür können an der Unterseite des Sitzteils befestigte Schienenelemente auf walzenartigen Elementen gegenüber dem Grundrahmen abrollen.

Zudem ist der Grundrahmen im Bereich der Rückenlehne für die Durchführung der Schwenkbewegung um eine sich horizontal erstreckende Achse in Vorwärts- und Rückwärtsrichtung verschwenkbar. Hierdurch kann dieser Rückenlehnengrundrahmen unabhängig davon, ob das Sitzteil verschoben wird oder nicht, nach hinten geneigt werden, um so insbesondere einen nach hinten geneigten Schulterbereich zu erhalten. Der Lendenwirbelbereich ändert sich hierbei ebenso derart, dass der Lordoseeffekt geringfügig verringert wird.

Vorzugsweise wird die Funktionsweise des wippenartigen Elements ohne ein Nachhintenschwenken des Grundrahmens im Rückenlehnenbereich durch das Nachvorneschieben des Sitzteils genutzt.

Gemäß einer Weiterbildung der Erfindung geht die vorwärtsgerichtete Bewegung des Sitzteils mit einem Nachhintenschwenken des Grundrahmens im Rückenlehnenbereich einher, so dass sich die Rückenlehne zeitgleich mit dem nach vorne schiebenden Sitzteil nach hinten neigt und eine liegendere Position eingenommen wird. Dies führt zu einer weniger lordoseorientierten gewünschten Stellung des Rückens der benutzenden Person, welches durch die automatische Verschwenkung des wippenartigen Elementes erreicht wird. Hierfür ist die Schwenkachse des wippenartigen Elementes idealerweise im rückwärtigen Bereich des Sitzteils angeordnet und mit diesem verbunden, so dass mit einer Schiebebewegung des Sitzteils eine Schiebebewegung der Schwenkachse zeitgleich einhergeht.

Bevorzugt wird das wippenartige Element vorderseitig von einem Rückenlehnenpolster abgedeckt, welches durch Verschwenkung eines oberen Endes des wippenartigen Elementes eine lordose- oder kyphoseartige Form annimmt. Hierfür ist das wippenartige Element beispielsweise als U-förmige Stange oder als plattenähnliches Element ausgebildet, wobei sowohl die U-förmige Stange als auch das plattenähnliche Element einen Lordose- oder Kyphoseeffekt zusätzlich derart unterstützen können, als dass es in Rückenlehnenhöhenrichtung bogenförmig oder sogar S-förmig ausgebildet ist.

Gemäß einer bevorzugten Ausführungsform ist das wippenartige Element an seinem oberen Ende mit im Wesentlichen S-förmigen Stangen, die sich entlang der Rückenlehne erstrecken, verbunden. Hierfür ist das obere Ende des wippenartigen Elementes während einer Schwenkbewegung des wippenartigen Elementes entlang der Stangen verschiebbar, wodurch die um jeweils eine sich in Längsrichtung der Rückenlehne erstreckende Achse drehbar gelagerten Stangen ihre Stellung gegenüber der Vorderseite der Rückenlehne automatisch durch Verschiebung des oberen Endes des wippenartigen Elementes verändern. Auf diese Weise kann vorteilhaft eine stufenlose Veränderung der S-Form zeitgleich mit einem Vorwärts- oder Rückwärtsschieben des Sitzteils erreicht werden.

Weitere vorteilhafte Ausführungsformen ergeben sich aus den Unteransprüchen.

Vorteile und Zweckmäßigkeiten sind der nachfolgenden Beschreibung in Verbindung mit der einzig gezeigten Figur zu entnehmen.

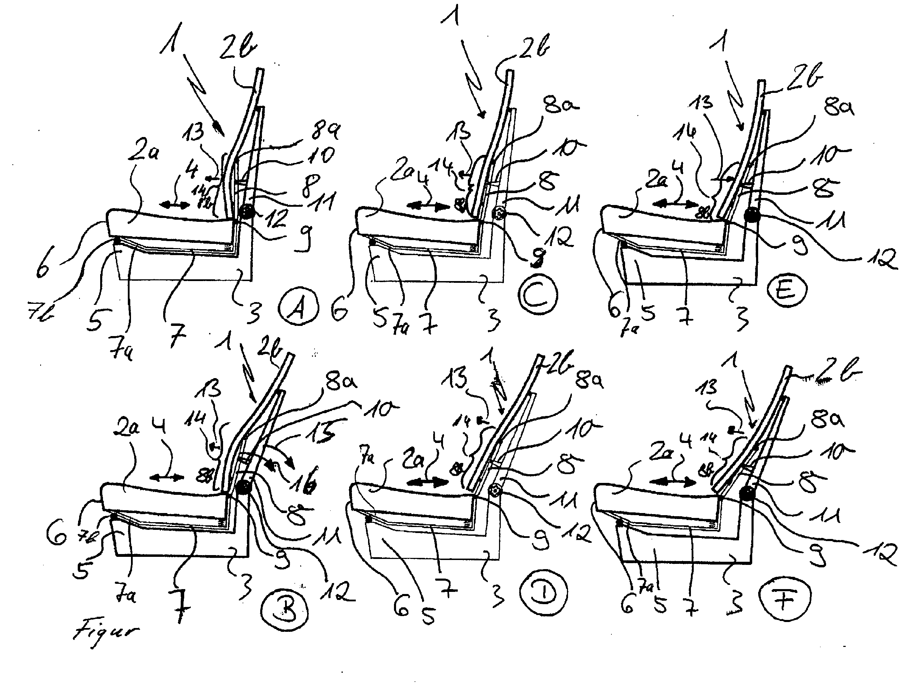

In der Figur sind in schematischer Querschnittsansicht insgesamt sechs verschiedene Positionierungen der Rückenlehne und eines Sitzteils eines erfindungsgemäßen Fahrzeugsitzes dargestellt.

Hierbei zeigen die Ansichten A und B den Fahrzeugsitz in unverschobener Stellung, jedoch mit gerader und geneigter Rückenlehne. In den Darstellungen C und D wird der Fahrzeugsitz mit verschobenem Sitzteil und einer ungeneigten und geneigten Rückenlehne gezeigt. In den Darstellungen E und F wird der Fahrzeugsitz mit einem noch weiter nach vorne geschobenem Sitzteil und der ungeneigten oder geneigten Rückenlehne wiedergegeben.

Die Darstellung A zeigt einen Fahrzeugsitz mit einer Rückenlehne 1 und einem Sitzteil 2a, wobei die Rückenlehne ein Rückenlehnenpolster 2b aufweist. Sowohl das Sitzteil 2a als auch das Rückenlehnenpolster 2b sind in einem Grundrahmen 3 angeordnet.

Das Sitzteil 2a kann in Vorwärts- und Rückwärtsrichtung 4 mittels einem Gleitlagersystem 7, 7a verschoben werden.

Während einer derartigen vorwärtsgerichteten Verschiebebewegung wird ein fahrzeugvorderseitiger Bereich 6 des Sitzteils 2a automatisch dadurch angehoben, dass ein vorderer Bereich des Grundrahmens 3 erhöht ausgebildet ist. Hierdurch wird der Gleitlagerabschnitt 7a, der gegenüber einer Sitzteilfläche mit einem Winkel angeordnet ist und schienenfömig ausgebildet sein kann, über walzenartige Elemente 7b abgerollt und erhöht den Bereich 6 des Sitzteils 2a.

Das wippenartige Element 8 mit seinem oberen Ende 8a drückt gegen das Rückenlehnenpolster 2b, indem es mittels eines Abstandhalters 10 gegenüber einem schwenkbaren Teil 11 des Grundrahmens 3 fixierbar beabstandet ist.

Für die Durchführung einer Schwenkbewegung weist das wippenartige Element 8 unterseitig eine Schwenkachse 9 auf, die im rückwärtigen Bereich des Sitzteils 2a angeordnet ist und so während einer Verschiebebewegung des Sitzteils 2a ebenso verschoben wird.

Der schwenkbare Teil 11 des Grundrahmens kann um eine horizontal angeordnete Schwenkachse 12 geschwenkt werden. Ein nach vorne gerichteter lordoseartig ausgebildeter Abschnitt in einem Lendenwirbelbereich 14 der Rückenlehne 1 entspricht in etwa in seiner Höhenausdehnung der Höhenabmessung 8b des wippenartigen Elementes 8.

Das Ende 8a bewirkt eine Auswölbung des Rückenlehnenpolsters 2b im Lendenwirbelbereich 14, wie es durch den Pfeil 13 angedeutet wird.

In der Darstellung B wird der Fahrzeugsitz mit unverschobenem Sitzteil und nach hinten verschwenktem schwenkbaren Teil 11 dargestellt.

Durch die Nachhintenverschwenkung des Teils 11 des Grundrahmens 3 wird gleichzeitig aufgrund des fixierbaren Abstandshalters 10 eine Nachhintenverschwenkung des wippenartigen Elements 16 durchgeführt, wie es durch die Bezugszeichen 16 angedeutet wird. Hierdurch findet keine oder allenfalls eine geringfügige Veränderung der S-Form der Rückenlehne 1 statt, es sei denn, die S-Form ist durch S-förmige Stangen, die sich von oben nach unten entlang der Rückenlehne erstrecken, gegebenenfalls ihre Stellung verändern können, und hier nicht näher dargestellt sind, vorgegeben.

Derartige S-förmige Stangen würden nämlich, sofern sie mit dem wippenartigen Element 8 in dessen oberen Bereich 8a mittels eines Schiebeelementes verbunden sind, durch eine Nachhintenverschwenkung des oberen Endes 8a eine Drehung um eine im Wesentlichen vertikal verlaufende Achse durchführen, die dazu führt, dass der lordose- und kyphoseartige Verformungsbereich des S-förmigen Rückenlehnenpolsters in seiner Bogenform verändert wird.

In der Darstellung C wird der Fahrzeugsitz mit dem nach vorne verschobenen Sitzteil 2a dargestellt. Wie dieser Darstellung deutlich zu entnehmen ist, wird durch eine nach vorne gerichtete Verschiebebewegung des Sitzteils 2a automatisch eine Höherstellung des fahrzeugvorderen Bereichs des Sitzteils 2a bewirkt, um so einen höheren Sitzkomfort bei sich gleichzeitig nach hinten neigender Rückenlehne zu erhalten.

In der Darstellung D ist der Fahrzeugsitz mit der gleichen Schiebestellung des Sitzteiles wie in der Darstellung C dargestellt. Gegenüber der Darstellung C weist der Fahrzeugsitz gemäß der Darstellung D zusätzlich den nach hinten geneigten Teil 11 des Grundrahmens 3 auf, wodurch eine zusätzliche Neigung der gesamten Rückenlehne 1 erzeugt wird. Hierfür gleitet das Rückenlehnenpolster 2b in seinem oberen Bereich rückseitig an dem Teil 11 mit zwischengelagertem Abstandshalter während der Schwenkbewegung entlang.

Sowohl der Darstellung C als auch der Darstellung D ist zu entnehmen, dass im Lendenwirbelbereich 14 der Rückenlehne eine weniger ausgeprägte lordoseartige Verformung der Rückenlehne besteht, als bei einem unverschobenem Sitzteil 2a wie es in Darstellung A und B wiedergegeben wird. Dies entspricht den Sitzkomfortansprüchen einer der den Fahrzeugsitz benutzenden Person, da bei aufrechtem Sitzen eine erhöhte Lordoseausbildung im Lendenwirbelbereich gewünscht wird, wohingegen bei der nach hinten geneigten Rückenlehne, die mit dem Nachvorneschieben des Sitzteils 2a einhergeht, eine geringer ausgeprägte Lordoseausbildung des Lendenwirbelbereiches der Rückenlehne gewünscht wird.

In den Darstellungen E und F wird der Fahrzeugsitz mit noch weiter nach vorne geschobenem Sitzteil 2a dargestellt, wobei in der Darstellung F wiederum zusätzlich der Rückenlehnenanteil 11 des Grundrahmens 3 nach hinten verschwenkt ist. Diesen beiden Darstellungen ist deutlich zu entnehmen, dass sich bei einem noch weiter nach vorne verschobenen Sitzteil 2a automatisch eine Kyphosestellung des Rückenlehnenpolsters einstellt, die bei nach hinten geneigtem Oberkörper der benutzenden Person, was sich aufgrund der nach hinten geneigten Rückenlehne, bedingt durch den nach vorne verschobenem Sitz, ergibt, gewünscht ist und als komfortabel empfunden wird.

Das wippenartige Element 8 kann mittels einer hier nicht näher dargestellten Verriegelungseinrichtung arretiert werden, um eine Fixierung ihrer momentanen Stellung und gegebenenfalls auch der Stellung des Rückenlehnenteils des Grundrahmens zu erhalten. Alternativ oder zusätzlich kann eine Verriegelungseinrichtung am Sitzteil derart angebracht sein, dass dessen Verschiebung nicht mehr möglich ist.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Rückenlehne
- 2a: Sitzteil
- 2b: Rückenlehnenpolster
- 3: Grundrahmen
- 4: Vorwärts- und Rückwärtsrichtung
- 5: vorderer Bereich des Grundrahmens
- 6: fahrzeugvorderer Bereich des Sitzteils
- 7, 7a: Gleitlagerelemente

- 7b: walzenartige Elemente
- 8: wippenartiges Element
- 8a: oberes Endes des wippenartigen Elementes
- 8b: schwenkbarer Abschnitt des wippenartigen Elementes
- 9: Schwenkachse des wippenartigen Elementes
- 10: Abstandshalter
- 11: schwenkbarer Teil des Grundrahmens
- 12: Grundachse des Grundrahmens
- 13: Vorwärtsrichtung
- 14: Lendenwirbelbereich
- 15: Schwenkbewegung des Teils 11 des Grundrahmens
- 16: Schwenkbewegung des wippenartigen Elementes

## Patentansprüche

1. Fahrzeugsitz mit Rückenlehne (1) und Sitzteil (2a), wobei das Sitzteil (2a) gegenüber einem Grundrahmen (3, 11) in Vorwärts- und Rückwärtsrichtung (4) verschiebbar ist und die Rückenlehne (1) einen in Vorwärts- und Rückwärtsrichtung (13) verformbaren Lendenwirbelbereich (14) mit einem um eine horizontal verlaufende Schwenkachse (9) schwenkbaren, wippenartigen Element (8), welches sich zumindest teilweise entlang der Rückenlehnenlängsrichtung erstreckt, aufweist,
**dadurch gekennzeichnet, dass**
die Schwenkachse (9) zusammen mit dem Sitzteil (2a) in Vorwärts- und Rückwärtsrichtung (4) verschiebbar ist und ein schwenkbarer Abschnitt (8b) des wippenartigen Elements (8) an dem Grundrahmen (3, 11) in einem Rückenlehnenbereich des Grundrahmens (11) befestigt und der Grundrahmen (11) im Rückenlehnenbereich um eine sich horizontal erstreckende Achse (12) in Vorwärts- und Rückwärtsrichtung (4) verschwenkbar ist.

2. Fahrzeugsitz nach Anspruch 1,
**dadurch gekennzeichnet, dass**
das Sitzteil (2a) im fahrzeugvorderen Bereich (6) unterseitig einen gegenüber der Sitzteilfläche angewinkelten Gleitlagerbereich (7a) aufweist, um während einer Verschiebung des Sitzteils (2a) in Vorwärtsrichtung (4) eine Höherstellung des fahrzeugvorderen Bereichs (6) des Sitzteils (2a) zu bewirken.

3. Fahrzeugsitz nach Anspruch 1 oder 2,
**dadurch gekennzeichnet, dass**
das wippenartige Element (8) vorderseitig von einem Rückenlehnenpolster (2b) abgedeckt wird, welches durch Verschwenkung eines oberen Endes (8a) des wippenartigen Elements (8) eine lordose- oder kyphoseartige Form annimmt.

4. Fahrzeugsitz nach einem der vorangegangenen Ansprüche,
**dadurch gekennzeichnet, dass**
das wippenartige Element (8) als U-förmige Stange ausgebildet ist.

5. Fahrzeugsitz nach einem der Ansprüche 1 - 3,
**dadurch gekennzeichnet, dass**
das wippenartige Element (8) als plattenähnliches Element ausgebildet ist.

6. Fahrzeugsitz nach einem der vorangegangenen Ansprüche,
**dadurch gekennzeichnet, dass**
das wippenartige Element (8) an seinem oberen Ende (8a) mit im Wesentlichen S-förmigen Stangen (8c) die sich entlang der Rückenlehne (1) erstrecken, verbunden ist.

7. Fahrzeugsitz nach Anspruch 6,
**dadurch gekennzeichnet, dass**
das obere Ende (8a) des wippenartigen Elements (8) während einer Schwenkbewegung des wippenartigen Elements (8) entlang der Stangen (8c) verschiebbar ist.

8. Fahrzeugsitz nach Anspruch 7,
**dadurch gekennzeichnet, dass**
die Stangen (8c) um jeweils eine sich in Längsrichtung der Rückenlehne (1) erstreckende Achse durch Verschiebung des oberen Endes (8a) des wippenartigen Elements (8) drehbar sind.

9. Fahrzeugsitz nach einem der vorangegangenen Ansprüche,
**dadurch gekennzeichnet, dass**
der schwenkbare Abschnitt (8a) des wippenartigen Elements (8) mittels einem fixierbaren Abstandshalter (10) am Rückenlehnenbereich des Grundrahmens (11) befestigt ist.

## Claims

1. Vehicle seat comprising a backrest (1) and a seat part (2a), wherein the seat part (2a) can be displaced in the forward and backward direction (4) with respect to a base frame (3, 11) and the backrest (1) has a lumbar spine region (14) which can be deformed in the forward and backward direction, said lumbar spine region having a rocker-like element (8) which can pivot about a horizontally running pivot axle (9) and extends at least partially along the longitudinal direction of the backrest, **characterised in that** the pivot axle (9) can be displaced together with the seat part (2a) in the forward and backward direction (4) and a pivotable section (8b) of the rocker-like element (8) is attached to the base frame (3, 11) in a backrest region of the base frame (11) and the base frame (11) in the backrest region can be pivoted in the forward and backward direction (4) about an axle (12) which extends horizontally.

2. Vehicle seat according to claim 1, **characterised in that** the seat part (2a) in the region (6) towards the front of the vehicle has on its underside a sliding bearing region (7a), which is angled with respect to the surface of the seat part, for providing a height adjustment of the seat part (2a) in the region (6) towards the front of the vehicle during a displacement of the seat part (2a) in the forward direction (4).

3. Vehicle seat according to claim 1 or 2, **characterised in that** the rocker-like element (8) is covered on its front side by a backrest pad (2b) which assumes a lordosis-type or kyphosis-type shape by pivoting an upper end (8a) of the rocker-like element (8).

4. Vehicle seat according to one of the preceding claims, **characterised in that** the rocker-like element (8) is designed as a U-shaped rod.

5. Vehicle seat according to one of claims 1 to 3, **characterised in that** the rocker-like element (8) is designed as a plate-like element.

6. Vehicle seat according to one of the preceding claims, **characterised in that** the rocker-like element (8) is connected at its upper end (8a) to essentially S-shaped rods (8c) which extend along the backrest (1).

7. Vehicle seat according to claim 6, **characterised in that** the upper end (8a) of the rocker-like element (8) can be displaced along the rods (8c) during a pivoting movement of the rocker-like element (8).

8. Vehicle seat according to claim 7, **characterised in that**, by displacing the upper end (8a) of the rocker-like element (8), the rods (8c) can be rotated about a respective axle extending in the longitudinal direction of the backrest (1).

9. Vehicle seat according to one of the preceding claims, **characterised in that** the pivotable section (8a) of the rocker-like element (8) is attached to the backrest region of the base frame (11) by means of a fixable spacer (10).

## Revendications

1. Siège de véhicule avec dossier (1) et assise (2a), l'assise (2a) pouvant coulisser dans la direction avant et arrière (4) par rapport à un cadre de base (3, 11), et le dossier (1) comportant une zone lombaire (14) déformable dans la direction avant et arrière (13), avec un élément (8) de type bascule pouvant pivoter autour d'un axe de pivotement (9) s'étendant horizontalement, ledit élément s'étendant au moins en partie le long de la direction longitudinale du dossier,
**caractérisé en ce que** l'axe de pivotement (9) peut coulisser avec l'assise (2a) dans la direction avant et arrière (4) et un segment pivotable (8b) de l'élément (8) de type bascule est fixé au cadre de base (3, 11) dans une zone de dossier du cadre de base (11), et le cadre de base (11) peut pivoter dans la direction avant et arrière (4) dans la zone de dossier autour d'un axe (12) s'étendant horizontalement.

2. Siège de véhicule selon la revendication 1,
**caractérisé en ce que**
l'assise (2a) présente, dans la zone avant de véhicule (6), sur sa face inférieure, une zone de palier glissant (7a) coudée par rapport à la surface de l'assise, afin de provoquer, pendant un coulissement de l'assise (2a) dans la direction avant (4), une élévation de la zone avant de véhicule (6) de l'assise (2a).

3. Siège de véhicule la revendication 1 ou 2,
**caractérisé en ce que**
l'élément (8) de type bascule est recouvert côté avant par un coussin de dossier (2b) qui, par pivotement d'une extrémité supérieure (8a) de l'élément (8) de type bascule, prend une forme de type lordose ou cyphose.

4. Siège de véhicule selon l'une quelconque des revendications 1 à 3,
**caractérisé en ce que**
l'élément (8) de type bascule est réalisé sous la forme d'une barre en U.

5. Siège de véhicule selon l'une quelconque des revendications 1 à 3,
**caractérisé en ce que**
l'élément (8) de type bascule est réalisé sous la forme d'un élément semblable à une plaque.

6. Siège de véhicule selon l'une quelconque des revendications 1 à 5,
**caractérisé en ce que**
l'élément (8) de type bascule est relié à son extrémité supérieure (8a) à des barres (8c), de forme sensiblement en S, qui s'étendent le long du dossier (1).

7. Siège de véhicule selon la revendication 6,
**caractérisé en ce que**
l'extrémité supérieure (8a) de l'élément (8) de type bascule peut coulisser le long des barres (8c), pendant un mouvement de pivotement de l'élément (8) de type bascule.

8. Siège de véhicule selon la revendication 7,
**caractérisé en ce que**
les barres (8c) peuvent tourner chacune autour d'un axe, s'étendant dans la direction longitudinale du dossier (1), par coulissement de l'extrémité supérieure (8a) de l'élément (8) de type bascule.

9. Siège de véhicule selon l'une quelconque des revendications 1 à 8,
**caractérisé en ce que**
le segment pivotable (8a) de l'élément (8) de type bascule est fixé, au moyen d'un écarteur (10) à fixer, à la zone de dossier du cadre de base (11).
